# EUROPEAN PATENT SPECIFICATION

(11) **EP 2 623 568 B1**
(45) Date of publication and mention of the grant of the patent: **28.09.2016**
(21) Application number: 13153097.4
(22) Date of filing: 29.01.2013
(51) Int. Cl.: C09D 11/106, C09D 11/322

(54) **Ink composition, image forming method, and printed matter using the same**
Tintenzusammensetzung, Bilderzeugungsverfahren und Druckmaterial damit
Composition d'encre, procédé de formation d'images et imprimés les utilisant

(30) Priority: 03.02.2012 JP 2012022342
(43) Date of publication of application: 07.08.2013
(73) Proprietor: Fujifilm Corporation, Minato-ku Tokyo (JP)
(72) Inventor: Shimohara, Norihide, Ashigarakami-gun, Kanagawa 258-8577 (JP)
(74) Representative: Höhfeld, Jochen

(56) References cited:
- EP-A1- 1 683 843
- EP-A1- 2 216 373
- US-A1- 2007 066 711
- US-A1- 2011 069 110

## Description

### BACKGROUND OF THE INVENTION

### Technical Field

The present invention relates to an ink composition, an image forming method, and printed matter using the same.

### Description of the Related Art

Image recording methods for forming an image on recording media, such as paper, based on image data signals include electrophotographic methods, sublimation transfer methods, melt transfer methods, and ink jet methods. With respect to the electrophotographic recording method, since a process of forming an electrostatic latent image on a photoreceptor drum by means of electric charge and light exposure is required in the method, there arise issues in that, for example, a relatively more complicated system is necessary, leading to higher production costs. On the other hand, with respect to the thermal transfer method, although the apparatus used for the method is inexpensive, there are issues in terms of, for example, use of ink ribbons causing higher running costs and generating waste materials.

In contrast, in an ink jet recording method, an image is formed directly on a recording medium by ejecting ink only to the desired image portion using an inexpensive apparatus. Thus, the ink jet recording method is an excellent image recording method which enables efficient use of ink, with low running costs, and which generates little noise.

Among the ink compositions used for ink jet recording of an image, an aqueous ink using latex may be suitably used for printing of an image, and also for a pre-treatment for imparting printability to a recording medium, a post-treatment for protecting and/or decorating a printed image, or the like. Furthermore, since it contains water as the main component, it is very safe and applicable to high-density ink jet recording owing to the lower viscosity thereof. Thus, aqueous ink using latex serves as a technique having many excellent characteristics and broad potential.

As an example of the basic constituent materials of an ink composition of an aqueous ink containing latex, an ink composition which includes an acrylic polymer latex having a particle diameter of 200 nm or so, a water soluble organic solvent, a pigment dispersion, and a surfactant, and which is believed to have excellent ink resistance after drying and excellent ejection property, has been disclosed (see Japanese National Phase Publication No. 2011-507991, for example). Further, an ink composition containing 0.1 nm to 10 nm polymer particles and a water soluble polymer and having excellent ejection recovery property and excellent anti-blocking property of a formed image has been disclosed (see Japanese Patent Application Laid-Open (JP-A) No. 2011-46908, for example).

### SUMMARY OF THE INVENTION

However, since the viscosity increase in an ink composition containing latex particles upon drying is insufficient, there is still room for improvement in suppression of bleeding in an ink composition containing latex particles, and there is still room for improvement in terms of the image strength or glossiness of a formed image when drying of an ink composition is carried out at a low temperature.

Accordingly, it is an object of the present invention in view of the above-described circumstances to provide an ink composition which can form an image without bleeding when an image is formed by ink jet method and can form an image with excellent gloss even when dried at low temperature.

Another object of the invention is to provide an image forming method for forming an image with suppressed bleeding and excellent gloss by using the ink composition of the invention and printed matter having an image with high sharpness and excellent gloss.

A first aspect of the invention is to provide an ink-jet ink composition, including: (a) from 3% by mass to 10% by mass of polymer compound particles that include a first copolymer including at least one repeating unit derived from a hydrophilic monomer in an amount of from 1% by mass to 15% by mass, that have a volume average diameter of from 100 nm to 300 nm, and that have no cross-linked structure; (b) from 5% by mass to 20% by mass of at least one water soluble polymer; (c) from 0.1 % by mass to 10% by mass of at least one colorant; (d) from 5% by mass to 40% by mass of at least one water soluble organic solvent; and (e) water.

A second aspect of the invention is to provide an image forming method including applying the ink composition according to the first aspect, to a recording medium by an ink jet method, and reducing an amount of water in the ink composition.

A third aspect of the invention is to provide printed matter including, on a recording medium, an image formed using the ink composition of the first aspect or an image recoded by the image forming method of the second aspect.

The mechanism of the invention is believed to be as follows, although it is somewhat unclear.

According to the invention, the polymer compound particles (a), which include a repeating unit derived from a hydrophilic monomer within the above-described range, have a diameter of from 100 nm to 300 nm, and have no cross-linked structure, are included, and, therefore, it is believed that the polymer compound particles (a) have good affinity with the water soluble polymer (b) that is also present in the ink composition, and are present in an aqueous solvent with good dispersion property.

Meanwhile, it is believed that when the ink composition is applied as droplets onto a recoding medium, bleeding is suppressed by an action of the water soluble polymer (b). Further, when the amount of water in the solvent is reduced upon drying, the concentration of the water soluble organic solvent (d) is increased. It is also believed that since the polymer particles having no cross-linked structure have a lower melting point and higher solubility in an organic solvent compared to particles of a polymer compound with a cross-linked structure, solubilization or softening of the surface of polymer particles proceeds even when drying is carried out at a low temperature, and therefore, due to such reasons, adhesion to the recording medium and adhesion among adjacent polymer particles are improved, and an image with excellent gloss is obtained.

In the present specification, the numerical range described as "from A to B" means a range including the numbers A and B as the lower limit and the upper limit thereof, respectively.

In the present specification, the "alkyl group" indicates a "linear, branched, or cyclic" alkyl group. Further, in the present specification, the term "substituent group" (group of atoms) includes a non-substituted substituent and a further substituted substituent in its scope. Thus, in the present specification, the scope of the term "alkyl group" includes both an unsubstituted alkyl group and a substituted alkyl group, and it is the same for other substituent groups.

In the present specification, an expression "(meth)acrylate" is used for indicating either acrylate or methacrylate or both, an expression "(meth)acryl" is used for indicating either acryl or methacryl or both, and an expression "(meth)acryloyl" is used for indicating either acryloyl or methacryloyl or both.

In the present specification, an expression "step" includes not only an independent step but also a step that cannot be clearly distinguished from other steps as long as the effect desired from the step is obtained.

According to the invention, an ink composition capable of forming an image with suppressed bleeding when an image is recorded by an ink jet method and also capable of forming an image with excellent gloss even when dried at a low temperature, can be provided.

Further, according to the invention, an image forming method useful for forming an image with suppressed bleeding and excellent gloss by using the ink composition of the invention, and printed matter having an image with high sharpness and excellent gloss can be provided.

### DETAILED DESCRIPTION OF THE INVENTION

Herein below, the ink composition, the image forming method, and the printed matter of the invention are explained in greater detail.

### Ink Composition

The ink composition of the invention is an ink-jet ink composition including (a) from 3% by mass to 10% by mass of polymer compound particles that include a copolymer including at least one repeating unit derived from a hydrophilic monomer in an amount of from 1% by mass to 15% by mass, that have a volume average diameter of from 100 nm to 300 nm, and that have no cross-linked structure, (b) from 5% by mass to 20% by mass of at least one water soluble polymer, (c) from 0.1% by mass to 10% by mass of at least one colorant, (d) from 5% by mass to 40% by mass of at least one water soluble organic solvent, and (e) water. Specifically, the polymer compound particles (a) are present as solid matter dispersed in an aqueous dispersion medium containing water (e). Further, if desired, the ink composition of the invention may further include one or more additional components. When a pigment is used as a colorant, it may be contained in the form of pigment dispersion.

Herein below, components contained in the ink composition of the invention are explained.

### <(a) Polymer Compound Particles >

Herein below, the polymer compound particles (a) that include a copolymer including at least one repeating unit derived from a hydrophilic monomer in an amount of from 1% by mass to 15% by mass, that have a volume average diameter of from 100 nm to 300 nm, and that have no cross-linked structure may also be referred to as "polymer particles (a)", and the copolymer that is included in the polymer particles (a) and includes at least one repeating unit derived from a hydrophilic monomer in an amount of from 1% by mass to 15% by mass may also be referred to as "specific copolymer (a-1)".

In the invention, the polymer particles (a) includes the specific copolymer (a-1), have a volume average diameter of from 100 nm to 300 nm, and have no cross-linked structure.

Further, the expression "the polymer particles (a) have no cross-linked structure" means that the copolymer used for forming the polymer particles (a) have no cross-linked structure in the molecule. By not having a cross-linked structure, the copolymer becomes soluble in the water soluble organic solvent (d), which is co-present, and when the water content is reduced upon drying and the concentration of the water soluble organic solvent is increased, the surface of the polymer particles (a) is softened and adhesive property to a recording medium or neighboring the polymer particles (a) is improved, and as a result, an advantages such as better adhesion of a formed image to the recording medium can be obtained. Further, absence of cross-linking structure in the polymer particles (a) used for the invention can be confirmed by the following method, for example.

Polymer particles in a dispersion containing the polymer particles are precipitated using a centrifuge. To 1 part by mass of the precipitates obtained, 50 parts by mass or more of tetrahydrofuran or N-methyl pyrrolidone is added followed by heating at 70°C for 5 hours. The liquid obtained after heating is filtered with a 1 µm membrane filter, and presence or absence of any residue remained on the filter is checked. When any visually observable residue remained on the filter is obtained after the filtration, it is judged that the polymer particles have a cross-linked structure. On the other hand, when no residue remained on the filter is obtained after the filtration, it is judged d that the polymer particles have no cross-linked structure.

### Repeating unit derived from hydrophilic monomer

According to the invention, the repeating unit derived from a hydrophilic monomer which is contained in the specific copolymer (a-1) is not specifically limited as long as it is derived from a monomer containing a hydrophilic group (in the specification, also referred to as a "hydrophilic monomer"). Further, only one type or two or more types of the repeating units derived from a hydrophilic monomer may be included in the specific copolymer (a-1). In other words, the repeating units derived from a hydrophilic monomer may be repeating unites derived from one hydrophilic monomer or a mixture of two or more types of repeating units derived from a hydrophilic monomer different from one another.

The hydrophilic group is not specifically limited, and it may be a dissociating group or a non-ionic hydrophilic group.

With regard to the hydrophilic group included in the hydrophilic monomer according to the invention, from the viewpoint of good self-dispersion property of the polymer particles (a) to be formed in an aqueous solvent and stability of the formed ink composition in emulsion or dispersion state, at least one is preferably a dissociating hydrophilic group, and more preferably an anionic dissociating group.

Examples of the anionic dissociating group include a carboxy group, a phosphoric acid group, and a sulfonic acid group. Preferable examples of the anionic dissociating group include a carboxy group and sulfonic acid group. More preferable examples of the anionic dissociating group include a carboxy group.

The hydrophilic monomer according to the invention is, from the viewpoint of self-dispersion property, preferably a monomer containing a dissociating hydrophilic group. A monomer containing a dissociating group which has a dissociating group and an ethylenically unsaturated bond is preferable.

Examples of the monomer containing a dissociating group include an unsaturated carboxylic acid monomer, an unsaturated sulfonic acid monomer, and an unsaturated phosphoric acid monomer.

Specific examples of the hydrophilic unsaturated carboxylic acid monomer containing a carboxy group as a hydrophilic group include acrylic acid, methacrylic acid, crotonic acid, itaconic acid, maleic acid, fumaric acid, citraconic acid, and 2-methacryloyloxy methyl succinic acid.

Specific examples of the monomer having a sulfonic acid group as a hydrophilic group include styrene sulfonic acid, 2-acrylamide-2-methylpropane sulfonic acid, 3-sulfopropyl (meth)acrylate, and bis-(3-sulfopropyl)-itaconic acid ester.

Specific examples of the monomer containing a phosphoric acid group as a hydrophilic group include vinyl phosphonic acid, vinyl phosphate, bis(methacryloxyethyl) phosphate, diphenyl-2-acryloyloxyethyl phosphate, diphenyl-2-methacryloyloxyethyl phosphate, and dibutyl-2-acryloyloxyethyl phosphate.

Among the aforementioned monomers containing a dissociating group, from the viewpoint of dispersion stability and ejection stability of the ink composition to be obtained, the monomer containing a carboxy group is preferable. At least one of acrylic acid and methacrylic acid is preferable. Methacrylic acid is particularly preferable.

Examples of the monomer containing a non-dissociating non-ionic hydrophilic group which may be used as a monomer component of the specific copolymer (a-1) include ethylenically unsaturated monomer containing a (poly)ethylene oxy group or a polypropylene oxy group such as 2-methoxyethyl acrylate, 2-(2-methoxyethoxy)ethyl acrylate, 2-(2-methoxyethoxy)ethyl methacrylate, ethoxytriethylene glycol methacrylate, methoxypolyethylene glycol (molecular weight of from 200 to 1000) monomethacrylate, and polyethylene glycol (molecular weight of from 200 to 1000) monomethacrylate, and an ethylenically unsaturated monomer containing a hydroxy group such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, and hydroxyhexyl (meth)acrylate.

As for the monomer containing a non-ionic hydrophilic group used as a monomer component of the specific copolymer (a-1), an ethylenically unsaturated monomer having alkyl ether at a terminal thereof is desirable than an ethylenically unsaturated monomer having a hydroxy group at a terminal, from the viewpoint of stability of particles and content of water soluble components.

The specific copolymer (a-1) preferably includes, as the repeating unit(s) derived from a hydrophilic monomer, only repeating unit(s) derived from a hydrophilic monomer having an anionic dissociating group, or preferably includes, as the repeating units derived from a hydrophilic monomer, both repeating unit(s) derived from a hydrophilic monomer having an anionic dissociating group and repeating unit(s) derived from a hydrophilic monomer having a non-ionic hydrophilic group.

The specific copolymer (a-1) preferably includes two or more types of repeating units derived from a hydrophilic monomer containing an anionic dissociating group, or preferably includes two or more types of repeating units including one or more types of repeating units derived from a hydrophilic monomer containing an anionic dissociating group and one or more types of repeating units derived from a hydrophilic monomer containing a non-ionic hydrophilic group.

The content of the repeating unit(s) derived from a hydrophilic monomer that is contained in the specific copolymer (a-1) of the invention is, relative to all repeating units for constituting the specific copolymer (a-1), preferably in the range of from 1% by mass to 15% by mass, and more preferably in the range of from 3% by mass to 12% by mass.

When the content of the repeating unit derived from a hydrophilic monomer is less than 1% by mass, dispersion stability of the particles tends to decrease, and on the other hand, when it is greater than 15% by mass, the particles themselves tend to dissolve in the medium, and thus both are not desirable.

### Additional repeating units

In addition to the repeating units derived from a hydrophilic monomer, the specific copolymer (a-1) of the invention further includes a repeating unit derived from a monomer containing no hydrophilic group.

The repeating unit derived from a monomer having no hydrophilic group (herein below, may also be referred to as "additional repeating unit") is not specifically limited, as long as it is a repeating unit derived from a monomer which contains no hydrophilic group in the molecule. Only one type or two or more types of additional repeating units may be included. Examples of the monomer containing no hydrophilic group include a monomer which contains at least one selected from the group consisting of chain aliphatic groups, cyclic aliphatic groups, and aromatic groups in the molecule, and contains no hydrophilic group. Since the polymer particles (a) according to the invention have no cross-linked structure, it is preferable that the additional repeating unit(s) contain no cross-linkable group.

Specific examples of the monomer for forming the above-described "additional repeating unit" (herein below, it may be also referred to as "additional copolymerizable monomer") include alkyl (meth)acrylate such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and ethyl hexyl (meth)acrylate; (meth)acrylate containing an aromatic ring such as benzyl(meth)acrylate and phenoxyethyl (meth)acrylate; styrenes such as styrene, α-methylstyrene, and chlorostyrene; dialkylaminoalkyl (meth)acrylate such as dimethylaminoethyl (meth)acrylate; N-hydroxyalkyl (meth)acrylamide such as N-hydroxymethyl (meth)acrylamide, N-hydroxyethyl (meth)acrylamide, and N-hydroxybutyl (meth)acrylamide; and N-alkoxyalkyl (meth)acrylamide such as N-methoxymethyl (meth)acrylamide, N-ethoxymethyl (meth)acrylamide, N-(n-, iso)butoxymethyl (meth)acrylamide, N-methoxyethyl (meth)acrylamide, N-ethoxyethyl (meth)acrylamide, and N-(n-, iso)butoxyethyl (meth)acrylamide.

Among them, the additional copolymerizable monomer(s) may be preferably at least one selected from the group consisting of (meth)acrylates containing a chain or branched alkyl group having from 1 to 12 carbon atoms and styrene, in consideration of flexibility of the polymer backbone, ease of controlling the glass transition temperature (Tg), and dispersion stability of the formed polymer particles (a). More preferably, the additional copolymerizable monomer(s) may be at least one selected from the group consisting of (meth)acrylates containing a chain or branched alkyl group having from 1 to 8 carbon atoms and styrenes may be used. Particularly preferably, the additional copolymerizable monomer(s) may be selected from the group consisting of methyl (meth)acrylate, n-butyl (meth)acrylate, and 2-ethyl hexyl (meth)acrylate. The chain alkyl group as used herein refers to an alkyl group having a straight chain or a branched chain.

In the invention, (meth)acrylate containing an aromatic group can be preferably used. When (meth)acrylate containing an aromatic group is used, it is possible to obtain the polymer particles (a) having improved resistance to a solvent.

The specific copolymer (a-1) may include only one type of repeating unit derived from a monomer containing no hydrophilic group, or may include two or more types of repeating unit derived from a monomer containing no hydrophilic group, depending on the purpose.

The content of the repeating unit derived from a monomer containing no hydrophilic group is preferably in the range of from 85% by mass to 99% by mass, and more preferably in the range of from 85% by mass to 97% by mass.

Preferred examples of a combination of the monomer(s) containing a hydrophilic group and the monomer(s) containing no hydrophilic group that is used for synthesis of the specific copolymer (a-1) according to the invention include a combination of methacrylic acid (MMA) as a monomer containing a hydrophilic group and at least one selected from the group consisting of methyl methacrylate (MMA), 2-ethyl hexyl acrylate (EHA), n-butyl acrylate (BA), and styrene (St).

Further, examples of a combination of the monomer(s) containing a hydrophilic group and the monomer(s) containing no hydrophilic group (monomer(s) containing a hydrophilic group / monomer(s) containing no hydrophilic group) include (MAA / MMA and EHA), (MAA / MMA and St), (MAA / St and EHA), (MAA / BA, EHA and St), and (MAA / BA, EHA and MMA). Among them, the combination of (MAA / MMA and EHA) is preferable. A combination in which the mass ratio of MAA in the copolymer is from 1% by mass to 12% by mass and the mass ratio of MMA is from 40% by mass to 80% by mass is more preferable.

Since the polymer particles (a) according to the invention have no cross-linked structure in each particle, the repeating units for forming the specific copolymer (a-1) preferably contain no cross-linkable group, for example, a functional group which forms a cross-linked structure by reaction with each other when applied with energy such as heat and light. Examples of the functional group which can form a cross-linked structure include a cationic polymerizable functional group such as an epoxy group and a radical polymerizable group such as ethylenically unsaturated bond, and it is preferable that the repeating units for forming the specific copolymer (a-1) do not contain any of such functional groups.

The specific copolymer (a-1) according to the invention is preferably a vinyl polymer from the viewpoint of an ejection property and production suitability of an ink composition.

The specific copolymer (a-1) according to the invention can be obtained by a known polymerization method, for example radical polymerization of a monomer containing a hydrophilic group and a monomer containing no hydrophilic group. Further, if necessary, partial neutralization of the dissociating hydrophilic group among the hydrophilic groups may be performed with a hydroxide or the like of an alkali metal. When the specific copolymer (a-1) according to the invention is obtained by a solution polymerization method, the polymer particles (a) can be obtained by a known method such as a reverse phase emulsification method. When the specific copolymer (a-1) is prepared by a heterogeneous polymerization method such as emulsifying polymerization method, suspension polymerization method, or dispersion polymerization method, which uses water as a medium, the specific copolymer (a-1) can be obtained as the polymer particles (a).

The molecular weight (a weight average molecular weight for those having molecular weight distribution) of the specific copolymer (a-1) for forming the polymer compound particles (a) is preferably from 2,000 to 100,000. The weight average molecular weight of from 2,000 to 80,000 is more preferable. The weight average molecular weight of from 3,000 to 50,000 is particularly preferable.

The weight average molecular weight is measured with gel permeation chromatography (GPC). The GPC is performed by using a GPC instrument (trade name: HLC-8020GPC, manufactured by Tosoh Corporation), and as columns, the columns (trade names: TSK gel SUPER HZM-H, TSK gel SUPER HZ4000, and TSK gel SUPER HZ200, all manufactured by Tosoh Corporation, 4.6 mm ID (internal diameter), 15 cm) are used and THF (tetrahydrofuran) is used as an eluent.

### Method for production of (a) polymer compound particles

The polymer particles (a) of the invention include, as a major component, the specific copolymer (a-1) which includes a repeating unit derived from a monomer containing a hydrophilic group, and the polymer particles are included in the ink composition as being dispersed in an aqueous medium containing at least water (e).

Specific examples of the method for production of the polymer particles (a) include a method including emulsion dispersion of water dispersible particles, which are prepared in advance, according to a known method such as a reverse phase emulsification, and a method of polymerizing to obtain a polymer compound in a dispersed state by emulsion polymerization or the like.

Of these, the emulsion dispersion method is preferred as a method for producing the polymer particles (a). Preferable examples of the emulsion dispersion method include a method including adding water to a mixture including an organic solvent and a polymer including a repeating unit derived from a monomer containing a hydrophilic group and a repeating unit derived from a monomer containing no hydrophilic group, or adding the mixture to water, to emulsifying the mixture, thereby forming particle, that is, a method including producing a solution in which the specific copolymer (a-1) is dissolved in an organic solvent (first process) and preparing a dispersion by mixing the obtained polymer solution with a liquid containing at least water.

The state of dispersion may be any state. For example, the specific polymer (a-1) may be emulsified in an aqueous medium, may be obtained by emulsion polymerization, or may be dispersed as micelles, or the molecule chain of a polymer partially including a hydrophilic structure in the molecule may be dispersed.

The volume average particle diameter of the polymer particles (a) is from 100 nm to 300 nm, preferably from 100 nm to 250 nm, and particularly preferably, from 100 nm to 200 nm. The particle diameter distribution is not particularly limited, and may be a wide particle diameter distribution or a monodispersed particle diameter distribution. It is possible to control the particle diameter and the particle diameter distribution by a means such as centrifugation and filtration.

The volume average particle diameter of the polymer particles (a) can be measured by, for example, a dynamic light scattering method. As for the particle diameter of the polymer particles (a) of the invention, values that are measured by a common method using Microtrac UPA-EX150 (trade name, manufactured by Nikkiso Co., Ltd.), and thus it does not necessarily indicate the primary particle diameter.

The ink composition of the invention may include one type or two or more types of the polymer particles (a). When two or more types of the polymer particles (a) are included in the ink composition, the combination of the two or more types is not specifically limited, as long as the content of the repeating unit derived from a hydrophilic monomer and the particle diameter are within the ranges defined by the invention. Two or more types with different composition may be used. Two or more types with different particle diameter may be used.

The content of the polymer particles (a) in the ink composition is in the range of from 3% by mass to 10% by mass, preferably, in the range of from 4% by mass to 9% by mass, and more preferably, in the range of from 5% by mass to 8% by mass.

### <(b) Water Soluble Polymer>

The ink composition of the invention includes the water soluble polymer (b).

The water soluble polymer used for the invention indicates a polymer which is substantially dissolved in an amount of 10% by mass or more in water or an ink vehicle containing the water soluble solvent (d) and water, at room temperature (25°C). As used herein, the expression "... dissolved in water" means a state in which whenthe water soluble polymer (b) is dissolved in water and the solution is subjected to particle diameter measurement by the dynamic light scattering of the solution, particles having a diameter of 10 nm or larger are not observed.

Examples of the water soluble polymer (b) that is used in the invention include proteins such as, gelatin, casein and albumin; natural rubbers such as gum Arabic and gum tragacanth; glucosides such as saponin; alginic acid; alginic acid derivatives such as propylene glycol alginate, triethanolamine alginate and ammonium alginate; cellulose derivatives such as methyl cellulose, carboxymethylcellulose, hydroxyethylcellulose and ethylhydroxycellulose; and water soluble synthetic polymer such as polyvinyl alcohols, polyvinyl pyrrolidones and polyacrylic acid.

Examples of the water soluble polymer (b) that is used in the invention further include copolymers described below that are determined as water soluble polymers according to the aforementioned requirements: acrylic copolymers such as acrylic acid-acrylonitrile copolymers, potassium acrylate-acrylonitrile copolymers, vinyl acetate-acrylic acid ester copolymers, acrylic acid-acrylic acid ester copolymers, and methacrylic acid-methacrylic acid ester copolymers; styrene-acrylic acid resins such as styrene-acrylic acid copolymers, styrene-methacrylic acid copolymers, styrene-methacrylic acid-acrylic acid ester copolymers, styrene-α-methyl styrene-acrylic acid copolymers and styrene-α-methyl styrene-acrylic acid-acrylic acid ester copolymers; styrene-maleic acid copolymers, styrene-maleic acid anhydride copolymers, vinyl naphthalene-acrylic acid copolymers, vinylnaphthalene-maleic acid copolymers, and vinyl acetate copolymers such as vinyl acetate-ethylene copolymers, vinyl acetate-fatty acid vinyl ethylene copolymers, vinyl acetate-maleic acid ester copolymers, vinyl acetate-crotonic acid copolymers, vinyl acetate-acrylic acid copolymers, and salts thereof.

Of these, preferable examples include acrylic resins such as acrylic acid-acrylic acid ester copolymers or methacrylic acid-methacrylic acid ester copolymers; and styrene-acrylic acid resins such as styrene-acrylic acid copolymers, styrene-methacrylic acid copolymers, styrene-methacrylic acid-acrylic acid ester copolymers, styrene-α-methyl styrene-acrylic acid copolymers and styrene-α-methyl styrene-acrylic acid-acrylic acid ester copolymers.

The water soluble polymer (b) used in the invention preferably has a hydrophilic group in a repeating unit. As used herein, the hydrophilic group is not specifically limited, , as long as it is a group having a function of enhancing hydrophilicity of the water soluble polymer (b). The hydrophilic group may be a non-inonic hydrophilic group or an ionic hydrophilic group such as an anionic or cationic group

The number of the hydrophilic group contained in the water soluble polymer (b) is not limited, and may be appropriately selected depending on the type of the hydrophilic group and molecular weight of the water soluble polymer (b) or the like. When the hydrophilicity is low, the polymer tends to be insoluble in water, present as latex, or aggregate or precipitate. Those having such physical properties are not included in the water soluble polymer (b) of the invention.

Further, the content of the repeating unit(s) derived from a hydrophilic monomer that are contained in (b) the water soluble polymer, which is used for the invention, is preferably larger than the content of the repeating unit(s) derived from a hydrophilic monomer of a copolymer that is contained in the polymer compound particles (a). The content is determined by analyzing the composition ratio of monomers in polymer by NMR, pyrolytic GC/MS, or the like of the polymer.

Specific examples of the hydrophilic group that is contained in (b) the water soluble polymer of the invention includes those exemplified as the hydrophilic group for the specific copolymer (a-1).

Examples of the non-ionic hydrophilic group which can be contained in the water soluble polymer (b) include a residue obtained by removing one hydrogen atom from a heterocyclic structure which contains a nitrogen atom or an oxygen atom, an amide group, a carbamoyl group, an alkyl-substituted carbamoyl group, an alcohol hydroxy group, and a group having polyalkylene oxy structure.

Examples of the heterocyclic structure which contains a nitrogen atom or an oxygen atom include lactones such as γ-butyrolactone; cyclic ureas such as 2-pyrrolidone or ethylene urea; cyclic carbonates such as ethylene carbonate or propylene carbonate; and cyclic ethers such as tetrahydrofuran or 1, 4-dioxane.

Examples of the ionic hydrophilic group that may be contained in the water soluble polymer (b) include a carboxyl group, a sulfo group, a phosphoric acid group, a phosphonic acid group, a phenolic hydroxy group, and a quaternary ammonium salt.

The ionic hydrophilic group may form a salt.

Of these, more preferable examples include an amide group, a carbamoyl group, an alkyl-substituted carbamoyl group, an alcohol hydroxy group, a group having a polyalkyleneoxy structure, a carboxy group, and a sulfur group. Further preferable examples include an alcohol hydroxy group, an alkyl-substituted carbamoyl group, a carboxy group, and a sulfo group.

The amide group is preferably an amide group having from 2 to 10 carbon atoms. The nitrogen atom of the amide group is preferably bonded with a hydrogen atom. Examples of the alkyl-substituted carbamoyl group include a monoalkyl carbamoyl group in which a hydrogen atom bonded to the nitrogen atom of a carbamoyl group is substituted with an alkyl group, and a dialkyl carbamoyl group obtained by replacing two hydrogen atoms bonded to the nitrogen atom of a carbamoyl group with alkyl groups. Of these, preferable examples include a monoalkyl carbamoyl group substituted with an alkyl group having 1 to 4 carbon atoms that is further substituted with an alkyl group having 1 to 8 carbon atoms or a hydroxy group. Preferred examples of the group having a polyalkylene oxy structure include, although not specifically limited, a polyalkylene oxy structure having an alkylene oxy group having 1 to 4 carbon atoms as a repeating unit. The alkylene oxy group in the polyalkylene oxy structure may be either a single type or two or more of them may be used in combination. The terminal group of the polyalkylene oxy structure is preferably a hydroxy group or an alkoxy group. A hydroxy group or a methoxy group is more preferable.

Examples of the ionic hydrophilic group include a carboxyl group, a sulfo group, a phosphoric acid group, a phosphonic acid group, a phenolic hydroxy group, a quaternary ammonium group, and a salt thereof. Examples of the counter salt include an alkali metal (Li, Na, K or the like) salt, an onium salt such as an ammonium salt, a pyridinium salt, and a phosphonium salt. Of these, more preferable examples include an alkali metal salt (Li, Na, K or the like) and an ammonium salt.

The hydrophilic group contained in the water soluble polymer (b) of the invention is preferably an ionic group. More preferred examples thereof include a carboxyl group, a sulfo group, an alkali metal (Li, Na, K, or the like) salt thereof, and an ammonium salt. The repeating unit containing a hydrophilic group is preferably contained in the range of from 30% by mass to 90% by mass, more preferably, in the range of from 40% by mass to 80% by mass in the water soluble polymer (b) when the hydrophilic group is a non-ionic hydrophilic group. When the hydrophilic group contained in the repeating unit is an ionic hydrophilic group, the repeating unit containing a hydrophilic group is preferably contained in the range of from 8% by mass to 60% by mass, more preferably in the range of from 8% by mass to 30% by mass in the water soluble polymer (b). When the content of the hydrophilic group is too small, there is a tendency that solubility of the water soluble polymer (b) is lowered so that particles of non-cross-linking polymer (a) are formed. On the other hand, when the content of the hydrophilic group is too large, there is a tendency that water resistance of a formed image is deteriorated.

Preferred examples of the hydrophilic monomer that may be used for forming the repeating unit contained in the water soluble polymer (b) include the monomers described below, but the invention is not limited to them.

Examples of the hydrophilic monomer that may be used for forming the repeating unit contained in the water soluble polymer (b) include: methoxypolyethylene glycol (meth)acrylate, polyethylene glycol (meth)acrylate, polypropylene glycol (meth)acrylate, poly(ethylene glycol-co-propylene glycol)(meth)acrylate, 2-hydroxyethyl (meth)acrylate, glycerol (meth)acrylate(meth)acryloyloxyethyl ethylene urea, vinyl pyrrolidone, 3-(meth)acryloyloxy-γ-butyrolactone, acrylamide, tert-butylacrylamide, N,N-dimethyl (meth)acrylamide, diacetone acrylamide, sodium (meth)acrylate, potassium (meth)acrylate, tetrabutyl ammonium (meth)acrylate, mono(meth)acryloyloxyethyl succinate, sodium mono(meth)acryloyloxyethyl succinate, sodium mono(meth)acryloyloxyethyl phthalate, (meth)acryloyloxyethyl phosphate, sodium 2-acrylamide-2-methylpropane sulfonate, 2-acrylamide-2-methylpropane sulfonic acid, styrene sulfonic acid, sodium styrene sulfonate, and vinyl benzoic acid.

The water soluble polymer (b) of the invention may include, in addition to the hydrophilic repeating unit, for example, a hydrophobic repeating unit. Examples of monomer that can be used together with the monomer which may form a hydrophilic repeating unit in the copolymerization for synthesizing the water soluble polymer (b) include styrene, p-methoxystyrene, methyl (meth)acrylate, ethyl (meth)acrylate, allyl (meth)acrylate, butyl (meth)acrylate, hexyl (meth)acrylate, 2-ethyl hexyl (meth)acrylate, octyl (meth)acrylate, decyl (meth)acrylate, stearyl (meth)acrylate, cyclohexyl (meth)acrylate, bornyl (meth)acrylate, isobornyl (meth)acrylate, benzyl(meth)acrylate, 2-ethyl hexyl diglycol (meth)acrylate, butoxyethyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-trifluoroethyl (meth)acrylate, 1H,1H,2H,2H-perfluorodecyl (meth)acrylate, 4-butylphenyl (meth)acrylate, phenyl (meth)acrylate, 2,4,5-trimethylphenyl (meth)acrylate, 4-chlorophenyl (meth)acrylate, phenoxymethyl (meth)acrylate, phenoxyethyl (meth)acrylate, glycidyl (meth)acrylate, glycidyl oxybutyl (meth)acrylate, glycidyl oxyethyl (meth)acrylate, glycidyl oxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxypropyl (meth)acrylate, butoxy diethylene glycol (meth)acrylate, trifluoroethyl (meth)acrylate, perfluorooctyl ethyl (meth)acrylate, 2-hydroxy-3-phenoxypropyl (meth)acrylate, (meth)acrylamide, N-butyl (meth)acrylamide, N-p-hydroxyphenyl (meth)acrylamide, and p-sulfamoylphenyl (meth)acrylamide. Preferred examples of the monomer which can be copolymerized with the monomer which may form a hydrophilic repeating unit include an alkyl (meth)acrylate having 1 to 8 carbon atoms such as methyl (meth)acrylate, ethyl (meth)acrylate, butyl (meth)acrylate, hexyl (meth)acrylate, and 2-ethyl hexyl (meth)acrylate. Further, a known monomer other than those described above may be used, if necessary.

The ink composition of the invention may include only one type of the water soluble polymer (b) or two or more types of the water soluble polymers (b).

The content ratio of the water soluble polymer(s) (b) in the ink composition of the invention is from 5% by mass to 20% by mass relative to the total amount of the ink composition. The content ratio of the water soluble polymer(s) (b) in the ink composition of the invention is preferably from 5% by mass to 15% by mass, and more preferably from 5% by mass to 10% by mass, relative to the total amount of the ink composition. When the content ratio is within the above range, it is possible to improve the ink jet ejection property of the ink composition of the invention and to suppress bleeding of a formed image.

### <(d) Water Soluble Organic Solvent>

The ink composition of the invention includes the water soluble organic solvent (d), which is described below as a main solvent or a dispersion medium (hereinafter, appropriately referred to as a medium), together with water (e).

In the invention, the water soluble organic solvent (d) means an organic solvent which has a solubility of 10% by mass or more in water at 25°C.

Examples of the water soluble organic solvent (d) which may be used in the invention include an alcohol solvent, a ketone solvent, an ether solvent, and an amide solvent.

It is preferable that both the polymer particles (a) and the water soluble polymer (b) of the invention are soluble in the water soluble organic solvent (d). If descriptions are made regarding the polymer particles (a), the polymer particles (a) are present in particle shape in an aqueous medium containing water (e) and the water soluble organic solvent (d). However, as water (e) in an image formed of dropped ink decreases by drying process or the like and the concentration of the water soluble organic solvent (d) increases, solubility of the specific copolymer (a-1) included in the polymer particles (a) having no cross-linked structure is improved and the particle surface may be solubilized or softened to exert the effect of the invention. Thus, as the water soluble organic solvent (d), it is preferable to use a solvent which can dissolve each of the polymer particles (a) and the water soluble polymer (b). Specifically, a water soluble organic solvent which can dissolve 10% by mass or more of the polymer particles (a) in the water soluble organic solvent (d) at 25°C is preferably selected and used.

Examples of alcohol solvents include methanol, ethanol, n-propyl alcohol, isopropyl alcohol, n-butanol, isobutanol, sec-butanol, tert-butanol, pentanol, hexanol, cyclohexanol, benzyl alcohol, glycols, and glycol monoalkyl ethers. Preferred examples include isopropyl alcohol, n-butanol, tert-butanol, glycols, and glycol monoalkyl ethers.

Preferred examples of glycols include ethylene glycol, diethylene glycol, triethylene glycol, propylene glycol, dipropylene glycol, tripropylene glycol, butylene glycol, di butylene glycol, and 2-methylpropanediol. Preferred examples of glycol monoethers include monomethyl ether, monoethyl ether, monopropyl ether, and monobutyl ether of the aforementioned glycols.

Examples of ether solvents include dibutyl ether and dioxane.

Examples of amide solvent include dimethyl formamide, dimethyl acetamide, 2-pyrrolidone, N-methyl pyrrolidone, and N-ethyl pyrrolidone.

Of these, from the viewpoint of enhancing solubility of the polymer particles (a) and the water soluble polymer (b), 2-pyrrolidone is especially preferable. From the viewpoint of enhancing an ejection property, glycols such as 2-methylpropane diol and glycol monoalkyl ethers are preferable.

In the ink composition of the invention, only one type of the water soluble organic solvent (d) may be included, or a combination of two or more types may be included. When used as a combination, those having good compatibility with each other are preferably selected.

The content ratio of the water soluble organic solvent(s) (d) in the ink composition of the invention is from 5% by mass to 40% by mass relative to the total amount of the ink composition. The content ratio of the water soluble organic solvent(s) (d) in the ink composition of the invention is preferably from 5% by mass to 35% by mass, and more preferably from 10% by mass to 30% by mass, relative to the total amount of the ink composition.

### <(c) Colorant>

By containing a colorant, the ink composition of the invention becomes a colored ink composition.

As a colorant, for example, a known dye, pigment, or organic resin particles and the like colored with a dye can be used without particular limitation. Of these, from the viewpoint of ink coloration, a colorant which is practically insoluble or poorly soluble in water is preferably used. Specific examples include various pigments, dispersion dyes, oil soluble dyes, and coloring matters which form a J aggregate. Pigments are more preferable from the viewpoint of light resistance or the like.

According to the invention, a water insoluble pigment or a pigment having a surface treated with a dispersant may be used as a colorant as it is. When a pigment is used, it is preferable to contain, in the ink composition, a pigment in a form of a pigment dispersion by using a dispersant, from the viewpoint of dispersion stability.

### Pigment

The pigment that may be used as a colorant in the ink composition of the invention is not particularly limited, and it may be a conventionally known organic pigment or inorganic pigment.

Examples thereof include an azo lake pigment, an azo pigment, polycyclic pigments such as a phthalocyanine pigment, a perylene pigment, a perynone pigment, an anthraquinone pigment, a quinacridone pigment, a dioxazine pigment, a diketopyrrolopyrrole pigment, a thioindigo pigment, an isoindolinone pigment, and a quinophthalone pigment, a dye lake such as a basic dye type lake and an acidic dye type lake, a nitro pigment, a nitroso pigment, an organic pigment such as aniline black and a daylight fluorescent pigment, and an inorganic pigments such as titan oxide, iron oxide, and carbon black.

Further, even if it is not described in the Color Index, any pigment capable of being dispersed in an aqueous phase can be used. Further, a pigment having surface treated with a surfactant or a polymer dispersant, graft carbon, or the like can be used.

Examples of the pigment include those disclosed in "Dictionary of Pigments" (published in 2000) edited by Seishiro Ito, "Industrial Organic Pigments" by W. Herbst, K. Hunger, JP-A No. 2002-12607, JP-A No. 2002-188025, JP-A No. 2003-26978, JP-A No. 2003-342503, and JP-A No. 2007-100071.

Of the above-described pigments, more preferable examples include azo pigments, phthalocyanine pigments, anthraquinone pigments, quinacridone pigments and carbon black-based pigments.

Specific examples of the pigment that can be used for the ink composition of the invention are given below, but the invention is not limited to them.

Examples of the organic pigments include a yellow pigment, a magenta pigment, a cyan pigment, a green pigment, an orange pigment, a brown pigment, a violet pigment, and a black pigment.

The yellow pigment is a pigment exhibiting yellow color, and examples thereof include a monoazo pigment, a disazo pigment, a nonbenzidine azo pigment, an azo lake pigment, a condensed azo pigment, an acidic dye lake pigment, a basic dye lake pigment, an anthraquinone pigment, a quinophthalone pigment, a pyrazolone pigment, an acetolone pigment, a metal complex salt pigment, a nitroso pigment, a metal complex azomethine pigment, a benzimidazolone pigment, and an isoindoline pigment. Among them, examples of the pigment that may be preferably used in the invention include C. I. Pigment Yellow (hereinafter, abbreviated as PY) 1, PY3, PY12, PY13, PY 14, PY16, PY 17, PY18, PY24, PY60, PY74, PY83, PY93, PY94, PY95, PY97, PY100, PY109, PY110, PY115, PY 117, PY120, PY128, PY138, PY139, PY150, PY151, PY153, PY154, PY155, PY166, PY167, PY173, PY175, PY180, PY181, PY185, PY194, PY213, PY214, and PY219. Among them, a monoazo pigment, a disazo pigment, a benzimidazolone pigment such as acetolone pigment, and an isoindoline pigment are preferable. An isoindoline pigment is most preferable.

The magenta pigment is a pigment exhibiting red or magenta color, and examples thereof include a monoazo pigment, a β-naphthol pigment, a disazo pigment, an azo lake pigment, a condensed azo pigment, an acidic dye lake pigment, a basic dye lake pigment, an anthraquinone pigment, a thio indigo pigment, a perinone pigment, a perylene pigment, a quinacridone pigment, an isoindolinone pigment, an alizarin lake pigment, a naphtholone pigment, a napthol AS lake pigment, a naphthol AS pigment, and a diketopyrrolopyrrole pigment.

Among them, examples of the pigment that may be preferably used in the invention include C. I. Pigment Red (hereinafter, abbreviated as PR) 1, PR2, PR3, PR4, PR5, PR6, PR21, PR38, PR42, PR46, PR53:1, PR57:1, PR52:1, PR46, PR48, PR81, PR83, PR88, PR144, PR149, PR166, PR179, PR178, PR190, PR224, PR123, PR224, PR19, PR122, PR202, PR207, PR209, PR180, PR83, PR170, PR171, PR172, PR174, PR175, PR176, PR177, PR179, PR185, PR194, PR208, PR214, PR220, PR221, PR242, PR247, PR254, PR255, PR256, PR262, PR268, PR264, PR269, PR272, PR282, and CI Pigment Violet 19. Among them, more preferably examples include a quinacridone pigment, and further preferable examples include an unsubstituted quinacridone pigment, dimethyl quinacridone pigment, and dichloroquinacridone pigment, such as PR42, PR122, PR202, PR209, PR282, CI Pigment Violet (hereinafter, abbreviated as PV) 19, and mixed crystals thereof.

The cyan pigment is a pigment exhibiting blue or cyan color, and examples thereof include a disazo pigment, a phthalocyanine pigment, an acidic dye lake pigment, a basic dye lake pigment, an anthraquinone pigment, and an alkali blue pigment. Examples of the pigment that may be preferably used in the invention include C. I. Pigment Blue (hereinafter, abbreviated as PB) 1, PB15, PB15:1, PB15:2, PB15:3, PB15:4, PB15:6, PB16, PB18, PB24, PB25, PB60, and PB79. Among them, more preferable examples include a copper phthalocyanine pigment is preferable, and further preferable examples include PB15, PB15:1, PB15:2, PB15:3, PB15:4, and PB15:6.

The green pigment is a pigment exhibiting green color, and examples thereof include a phthalocyanine pigment and a metal complex pigment. Examples of the pigment that may be preferably used in the invention include C. I. Pigment Green (hereinafter, abbreviated as PG) 7, PG8, PG10, and PG 36.

The orange pigment is a pigment exhibiting orange color and examples thereof include an isoindoline pigment, an anthraquinone pigment, a β-naphthol pigment, a naphthol AS pigment, an isoindolinone pigment, a perinone pigment, a disazo pigment, a quinacridone pigment, an acetolone pigment, and a pyrazolone pigment. Examples of the pigment that may be preferably used in the invention include C. I. Pigment Orange (hereinafter, abbreviated as PO) 2, PO3, PO4, PO5 PO13, PO15, PO16, PO22, PO24, PO34, PO36, PO38, PO43, PO48, PO49, PO51, PO55, PO60, PO61, PO62, PO64, PO66, PO72, and PO74. Of these, an isoindoline pigment is preferable.

The brown pigment is a pigment exhibiting brown color, and examples thereof include naphtholone pigments such as PBr25 or PBr32.

The violet pigment is a pigment exhibiting violet color, and examples thereof include a naphtholone pigment, a perylene pigment, a naphthol AS pigment, and a dioxazine pigment. Examples of the pigment that may be preferably used in the invention include C. I. Pigment Violet (hereinafter, abbreviated as PV) 13, PV17, PV23, PV29, PV32, PV37, and PV50.

The black pigment is a pigment exhibiting black color, and examples thereof include carbon black, an indazine pigment, and a perylene pigment. Examples that may be used in the invention include C. I. Pigment Black (hereinafter, abbreviated as PBk) 1, PBk7, PBk31, and PBk32.

Of these, a quinacridone pigment such as PB15:3, PB 15:4, PB 15:6, PR122, PV19, or a solid solution containing any of them, PY74, PY139, PY120, PY150, PY 151, PY154, PY180, PY185, PBk7, or the like is preferable from the viewpoint of color developing property and resistance to light.

Examples of the pigment exhibiting white color include basic lead carbonate (2PbCO₃Pb(OH)₂, so-called silver white), zinc oxide (ZnO, so-called zinc white), titanium oxide (TiO₂, so-called titanium white), and strontium titanate (SrTiO₃, so-called titanium strontium white). The inorganic particles used in the white pigment may be composed of a single compound or composite particles of oxide such as an oxide of silicon, aluminum, zirconium, or titan with an organometallic compound or an organic compound.

Here, titanium oxide, compared to other white pigments, has a lower density and a higher refractive index and is chemically or physically stable, and thus, titanium oxide has a greater masking and coloring potentials as a pigment, and is excellent in resistance to acid or alkali and other environmental factors. Thus, use of titanium oxide as the white pigment is preferable. Any of other white pigments (including white pigments other than those described above) may be used as needed.

As the average particle diameter of pigment particles gets smaller, the pigments other than the white pigment have better color forming property. Therefore, when a pigment dispersion according to the invention is applied to a pigment dispersion having a color other than white, the average particle diameter of the pigment particles included in the pigment dispersion is preferably in a range of from 0.01 µm to 0.4 µm, and more preferably in a range of from 0.02 µm to 0.3 µm. It is preferable that the maximum particle diameter of the pigment particles is 3 µm or less, and more preferably 1 µm or less. The particle diameter of the pigment particles can be controlled by selection of a pigment, a dispersant, and a dispersion medium, and adjustment of dispersion condition and filtering condition. Further, when the pigment dispersion of the invention is prepared as a white pigment dispersion which can be applied to a white ink composition or the like, from the viewpoint of providing sufficient shielding property, the average particle diameter of the pigment contained in the pigment dispersion is preferably 0.05 µm to 1.0 µm, and more preferably 0.1 µm to 0.4 µm. When a white pigment dispersion is prepared, the maximum particle diameter of the pigment is preferably 3 µm or less, and more preferably 1 µm or less.

### Dispersant

When a pigment is used as a colorant, a pigment dispersant may be used if necessary when pigment particles are prepared. Examples of pigment dispersant which may be used in the invention include an activating agent such as higher fatty acid salts, alkyl sulfate salts, alkyl ester sulfate salts, alkyl sulfonate salts, sulfosuccinic acid salts, naphthalene sulfonate salts, alkyl phosphate salts, polyoxyalkylene alkyl ether phosphate salts, polyoxyalkylene alkyl phenyl ether, polyoxyethylene polyoxypropylene glycol, glycerin ester, sorbitan ester, polyoxyethylene fatty acid amide, or amine oxide; and block or random copolymers formed from two or more types of monomers selected from styrene, styrene derivatives, vinyl naphthalene derivatives, acrylic acid, acrylic acid derivatives, maleic acid, maleic acid derivatives, itaconic acid, itaconic acid derivatives, fumaric acid, and fumaric acid derivatives, and salts thereof.

When a colorant is used in the ink composition of the invention, the content ratio of the colorant relative to the total amount of the ink composition is preferably in the range 0.1% by mass to 10% by mass, and more preferably in the range of 0.5% by mass to 6% by mass. When the content ratio is within the ranges, a colored image with excellent color can be formed.

Further, when a colorant is not contained, the ink composition is a transparent ink, and it is used as a pre-treatment agent for giving gloss to a recording medium or used for a post-treatment for forming a protective film with excellent gloss with coating of a surface of a printed matter having an image formed of ink, for example, an image portion formed of ink.

### <(e) Water>

The ink composition of the invention includes water.

Examples of water (e) that can be used include preferably ion exchange water or distilled water which does not contain impurities.

The content ratio of water in the ink composition of the invention is appropriately selected depending on the content the ratios of other components. In general, the content ratio of water is from 20% by mass to 80% by mass, preferably, from 30% by mass to 80% by mass, and more preferably, from 40% by mass to 70% by mass.

### <Additional Components>

If necessary, for the purpose of improving various properties such as ejection stability, compatibility with a print head or ink cartridge, storage stability, or image preservability, the ink according to the invention may include, in addition to the above-mentioned components, any one of various known additives selected from, for example, viscosity controllers, surface tension controllers, specific resistance controllers, film-forming agents, dispersants, surfactant, ultraviolet absorbers, antioxidants, anti-decoloration agents, fungicides, corrosion preventing agents, solid humectants, silica fine particles, pH controlling agents and the like within the range that the effects of the invention are not impaired.

### Thickening agent

In the ink composition of the invention, a thickening agent may be used for the purpose of controlling viscosity. The thickening agent that can be used in the invention is preferably a compound which contains a basic group or an acidic group.

Examples of the basic group contained in the thickening agent include an amino group which may have a substituent, and a quaternary ammonium group. Of these, a thickening agent having an amino group is preferable from the viewpoint of dispersion stability of the ink.

Examples of the acidic group contained in the thickening agent include a carboxyl group, a phosphoric acid group, a phosphonic acid group, a sulfonic acid group, and a sulfonamide group. Of these, in particular, a thickening agent having a carboxyl group or a sulfonic acid group is preferable from the viewpoint of dispersion stability of the ink.

The thickening agent having a basic group in the invention has at least one type of basic functional group. Of these, a thickening agent having the amine value of 10 mgKOH/g or more is preferable. A thickening agent having the amine value of 20 mgKOH/g or more is more preferable. A thickening agent having the amine value of 40 mgKOH/g or more is still more preferable.

The thickening agent having an acidic group has at least one type of acidic functional group. Of these, a thickening agent having the acid value of 10 mgKOH/g or more is preferable. A thickening agent having the acid value of 20 mgKOH/g or more is more preferable. A thickening agent having the acid value of 40 mgKOH/g or more is still more preferable.

Here, the amine value represents the total amount of primary, secondary, and tertiary amines, which are basic groups, and is expressed by the number of milligrams of KOH that is an equivalent amount of hydrochloric acid required for neutralizing all the basic groups in 1 g of a sample. The acid value is the number of milligrams of KOH that is required for neutralizing all the acid groups contained in 1 g of a sample.

When the thickening agent in the invention includes a basic group, the pH of the ink jet ink composition is preferably 7.5 or more, and more preferably from 8.0 to 9.0, from the viewpoint of dispersion stability of the ink.

When the thickening agent in the invention includes an acidic group, the pH of the ink jet ink composition is preferably 6.5 or less, and more preferably from 5.0 to 6.0, from the viewpoint of dispersion stability of the ink.

In the invention, the thickening agent may be used singly, or in combination of two or more thereof.

The content ratio of thickening agent in the ink jet ink composition may be appropriately selected in accordance with the type of the thickening agent. The content ratio of thickening agent(s) can be, for example, from 0.01% by mass to 20% by mass. The content ratio of thickening agent(s) is preferably from 0.01 % by mass to 5% by mass, more preferably from 0.1 % by mass to 3% by mass, and still more preferably from 0.1 % by mass to 2% by mass, from the viewpoint of ejection stability.

### Non-ionic surfactant

The ink jet ink composition of the invention preferably includes at least one non-ionic surfactant. The surface tension of the ink jet ink composition can be controlled by addition of the non-ionic surfactant.

From the viewpoint of ejecting ink droplets in a further preferable manner, the amount of the non-ionic surfactant to be added is preferably such that the surface tension of the ink composition of the invention is controlled to be from 20 mN/m to 60 mN/m, more preferably from 20 mN/m to 45 mN/m, and still more preferably from 25 mN/m to 40 mN/m.

Specific examples of the non-ionic surfactants that can be used in the invention include polyoxyethylene lauryl ether, polyoxyethylene octyl phenyl ether, polyoxyethylene oleyl phenyl ether, polyoxyethylene nonyl phenyl ether, oxyethylene-oxypropylene block copolymer, t-octylphenoxy ethyl polyethoxy ethanol, nonylphenoxy ethyl polyethoxy ethanol, and acetylene-type polyethylene oxide surfactants, such as SURFYNOL series (trade name, manufactured by Air Products & Chemicals, Inc.) and OLFINE E1010 (trade name, manufactured by Nissin Chemical Industry Co., Ltd.).

Only one non-ionic surfactant may be used singly, or two or more non-ionic surfactants can be used in combination. Preferable examples of the non-ionic surfactant include acetylene-type polyethylene oxide surfactants.

The content ratio of the non-ionic surfactant in the ink-jet ink composition of the invention is not particularly limited, if it is an appropriate amount for adjusting the surface tension. However, when the non-ionic surfactant is added, the content ratio is preferably 1% by mass or more, more preferably from 1% by mass to 10% by mass, and still more preferably from 1% by mass to 3% by mass, from the viewpoint of the effect.

The ink composition of the invention may also use, for the purpose of enhancing ejection suitability or the like, a fluorine-based surfactant having a fluorinated alkyl group. By containing a fluorine-based surfactant, improvement of not only the ejection property but also the adhesion to recording medium is expected. As a fluorine-based surfactant, the surfactant disclosed in JP-A No. 2002-277862 may be used, for example. Any of the following commercially available surfactants can be also used by it is.

Examples of the commercially available surfactants that may be used include a fluorine-based surfactant such as ZONYL FSN (trade name, a fluorine-based surfactant manufactured by Aldrich Company), MEGAFACE F171, MEGAFACE F173, MEGAFACE F176, MEGAFACE F189, and MEGAFACE R08 (trade names, manufactured by Dainippon Ink and Chemicals, Inc.), and SURFLON S-382, SURFLON SC101, SURFLON SC102, SURFLON SC103, SURFLON SC104, SURFLON SC105, and SURFLON SC106 (trade names, manufactured by Asahi Glass Co., Ltd.).

### <Method of Producing Ink Composition>

A method of producing the ink composition of the invention is not particularly limited, and the ink composition may be prepared by stirring, mixing, and dispersing respective components using a container-driven medium mill such as a ball mill, a centrifugal mill, or a planetary balls mill, a high-speed rotary mill such as a sand mill, a medium agitating mill such as a mixing vessel-type mill, or a simple dispersion apparatus such as a disperser. The order of addition of respective components is not particularly limited. Preferably, an azo pigment, a polymer dispersant, and an organic solvent are pre-mixed and subjected to a dispersion treatment, and the obtained dispersion is mixed with a resin and an organic solvent. At the time of addition or after addition, the components may be uniformly mixed using a simple stirring apparatus such as a three-one motor, a magnetic stirrer, a disperser, or a homogenizer. Alternatively, a mixing apparatus such as a line mixer may be used for mixing. In order to reduce the particle size of dispersed particles, a dispersing apparatus such as a bead mill or a high-pressure jet mill may be used for mixing. Depending on the type of pigment and/or polymer dispersant, a resin may be added at the time of pre-mixing carried out before a pigment dispersing treatment.

It is preferable that coarse particles or the like which may impair the ejection property are removed by filtering after producing the ink composition.

The ink composition of the invention preferably has a surface tension at 25°C of from 20 to 60 mN/m. More preferably, it is 20 mN/m to 45 mN/m, and still more preferably 25 mN/m to 40 mN/m. The surface tension is measured under conditions of 25°C using an automatic surface tensiometer CBVP-Z (trade name, manufactured by Kyowa Interface Science Co., Ltd.). The viscosity is preferably from 1 to 40 mPa·s, and more preferably from 3 to 30 mPa·s. The viscosity of the ink composition is measured under conditions of 25°C using a viscometer TV-22 (trade name, manufactured by Toki Sangho Co., Ltd.).

### <Image Forming Method>

The image forming method according to the invention includes applying the ink composition to a recording medium (ink application process) and reducing an amount of water (e) in the ink composition (drying process).

By carrying out the above-described processes, an image is formed of the ink composition that is fixed onto a recording medium.

The drying process is preferably carried out within the temperature range of from 30°C to 70°C.

With the ink composition of the invention, an image having excellent gloss and excellent adhesion onto a recording medium even when dried at low temperature can be formed. Since drying is generally carried out within the heating temperature range of 30°C to 110°C, when the drying is carried out at low temperature such as 70°C or lower as described above, the influence of heating on a recording medium can be reduced even when a resin sheet or a paper laminated with a resin is used as a recording medium that is described below.

### Ink application Process

Herein below, the ink application process in the image forming method of the invention is described. The ink application process according to the invention is not restricted as long as it is a process of applying the ink composition to a recording medium.

An ink jet recording apparatus used in the image forming method of the invention is not particularly limited, and may be arbitrarily selected from known ink jet recording apparatuses capable of providing an intended resolution. In other words, any one of known ink jet recording apparatuses including commercially available products can be used for ejection of the ink composition to a recording medium in the image forming method of the invention.

An example of ink jet recording apparatuses which may be used in the invention is an apparatus having at least an ink supply system, a temperature sensor, and a heating means.

The ink supply system includes, for example, a main tank, which contains the ink composition of the invention, a supply pipe, an ink supply tank disposed at a position immediately before an ink jet head, a filter, and a piezo-type ink jet head. The piezo-type ink jet head can be driven so as to eject multi size dots of preferably from 1 to 100 pl, or more preferably from 8 to 30 pl at a resolution of preferably from 320 x 320 to 4,000 x 4,000 dpi, more preferably from 400 x 400 to 1,600 x 1,600 dpi, and still more preferably 720 x 720 dpi. The term dpi (dot per inch) referred to in the invention represents the number of dots per inch (per 2.54 cm).

Since it is desirable to keep the ink composition of the invention to be ejected at a constant temperature, it is preferable that the ink jet recording apparatus has a temperature stabilizing means that stabilizes the temperature of the ink composition. The temperature of all of pipe systems and members of the ink jet recording apparatus, including the parts thereof from the ink tank (and an intermediate tank, if present) to a nozzle ejection surface, is a subjected to the temperature control. In other words, the parts from the ink supply tank to the ink jet head may be thermally insulated and heated.

The method of controlling temperature is not particularly limited. For example, it is preferable to place temperature sensors at plural positions on respective pipes, and control the heating in accordance with the flow amount of the ink composition and environment temperature, for example. A temperature sensor may be placed at a position adjacent to an ink supply tank and a nozzle of an ink jet head. Furthermore, it is preferable that the head unit to be heated is thermally shielded or insulated so as not to be affected by the outside temperature of the apparatus body. In order to reduce the printer start-up time necessary for heating, or to reduce the loss in thermal energy, it is preferable to thermally insulate from other parts, and also to reduce the thermal capacity of the entire heating unit.

The ejection of the ink composition using the above-described ink jet recording apparatus is preferably carried out after the viscosity of the ink composition is decreased to preferably a viscosity range of from 3 to 15 mPa·s, and more preferably a viscosity range of from 3 to 13 mPa·s by heating the ink composition to preferably a temperature ranging from 25 to 80°C, and more preferably a temperature ranging from 25 to 50°C. In particular, it is preferable to use the ink composition of the invention having an ink viscosity at 25°C of 50 mPa·s or less, because ink ejection is favorably carried out. By using this method, an excellent ejection stability can be achieved.

The temperature of the ink composition upon ejection is preferably maintained at a constant temperature. Accordingly, it is appropriate to control the temperature of the ink composition within a range ±5°C of a set temperature, preferably within a range ±2°C of a set temperature, and more preferably within a range ±1°C of a set temperature.

In the invention, a recording medium is not particularly limited, and any one of recording media known as supports or recording materials can be used. Examples of recording medium include paper, paper laminated with plastic (such as polyethylene, polypropylene, or polystyrene), metal plates (for example, which are made from aluminum, zinc, copper, or the like), plastic films (which are made from a polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, or the like), and a paper sheet or plastic film having the metal mentioned above laminated or deposited thereon. Specifically, since the ink composition of the invention has an excellent adhesiveness, it may be preferably used for a non-absorbable recording medium as the recording medium. From the viewpoints of adhesiveness, a plastic base material made from polyvinyl chloride, polyethylene terephthalate, polyethylene, or the like is preferable, a polyvinyl chloride resin base material is more preferable, and a polyvinyl chloride resin sheet or film is still more preferable.

### Drying Process

The drying process is a process for reducing an amount of water (e) in the ink composition as applied above. According to the process, an amount of the water soluble organic solvent (d) present in the ink composition is also reduced with water (e), and as a result, an ink image is fixed on a recording medium. Further, due to heating during the drying, the polymer particles (a) may be melted and fused.

The heating means is not limited as long as it is capable of reducing an amount of water (e) and an amount of the water soluble organic solvent (d) which are present in the ink composition applied. Examples thereof include a known heating means such as a heat drum, hot air, an infrared lamp, a heat oven, and a heating plate.

The heating temperature may be, for example, a temperature range of from 30°C to 110°C. However, depending on a recording medium, the temperature range of from 30°C to 70°C is preferable. Performing the drying in the temperature range of from 40°C to 70°C is more preferable. The time for drying and/or heating may be appropriately set depending on the composition of the ink composition to be used and/or printing speed.

The ink composition of the invention can form an image with excellent gloss even when it is dried at low temperature. Therefore, even when the drying is carried out at a temperature at which an influence on a recoding medium may not occur, an image with excellent adhesion onto a recording medium and excellent gloss can be formed.

### <Printed Matter>

The printed matter of the invention has, on an image recording medium, an image formed of the ink composition of the invention or an image formed of an ink composition which is recorded by the image forming method of the invention. Accordingly, the printed matter of the invention has suppressed bleeding upon application of the ink droplets and has an ink image with excellent gloss.

### EXAMPLES

Herein below, the invention is described by Examples in greater detail, but the invention is not limited to these Examples. It should be noted that "%" is in terms of mass unless specifically described otherwise.

Materials of pigment dispersions and ink compositions used in Examples and Comparative Examples are described below.

### <Preparation of Pigment Dispersion>

### Synthetic Example 1: Synthesis of polymer dispersant E-1

To a 500 ml three-neck flask equipped with a stirrer and a condenser, 44 g of methyl ethyl ketone was added, and then heated to 72°C under a nitrogen atmosphere. To this flask, a solution, prepared by dissolving 0.43 g of dimethyl-2,2'-azobisisobutyrate, 30 g of benzyl methacrylate, 5 g of methacrylic acid, and 15 g of methyl methacrylate in 25 g of methyl ethyl ketone, was added dropwise over 3 hours. After completion of the dropwise addition, the content in the flask was allowed to react for an additional one hour, and then a solution prepared by dissolving 0.21 g of dimethyl-2,2'-azobisisobutyrate in 1 g of methyl ethyl ketone was added thereto. The temperature of the mixture was raised to 78°C, and the mixture was heated for 4 hours. The obtained reaction solution was subjected to re-precipitation twice by using an excess amount of hexane, and the precipitated resin was dried, thereby obtaining 43 g of polymer dispersant E-1.

The composition of the obtained resin was confirmed by ¹H-NMR, and the weight average molecular weight (Mw) of the resin as determined by GPC was 42,000. Further, the acid value of the polymer as determined by the method described in JIS Standard (JISK 0070: 1992) was 65.4 mgKOH/g.

### Synthetic Example 2: Preparation of dispersion containing resin-coated pigment Dispersion containing resin-coated cyan pigment (C)

10 parts of Pigment Blue 15:3 (PHTHALOCYANINE BLUE A220, manufactured by Dainichi Seika Color & Chemicals), 5 parts of the polymer dispersant E-1 as obtained in Synthetic Example 1, 42 parts of methyl ethyl ketone, 5.5 parts of 1 mol/L NaOH solution, and 87.2 parts of ion exchange water were mixed and dispersed using a bead mill with zirconium beads having a diameter of 0.1 mm for 2 to 6 hours.

Methyl ethyl ketone was removed from the obtained dispersion at 55°C under reduced pressure, and part of water was further removed, thereby obtaining a dispersion containing the cyan pigment coated with the polymer dispersant E-1, which has a pigment concentration of 10.2% by mass. Herein below, the pigment dispersion is also referred to as "dispersion C".

### <(a) Preparation of Polymer Particles>

With the monomer composition ratio listed in following Table 1, (a) the polymer particles A-1 to A-4 were synthesized and prepared as a dispersion of polymer particles including (a-1) the specific copolymer (A'-1) to (A'-4) which have weight average molecular weight described in Table 1.

22 g of 2-butanone (manufactured by Wako Pure Chemical Industries, Ltd.) and 8.3 g of 2-propanol were added to 200 ml three-neck flask purged with nitrogen gas, and the temperature thereof was raised to 65°C. After that, 0.17 g of 2,2'-azobis(2,4-dimethylvaleronitrile) (V-65) was further added thereto. Subsequently, a mixed solution containing 15 g of EHA, 75 g of MMA, 10 g of MAA, 0.28 g of 3-mercaptopropionic acid (manufactured by Tokyo Chemical Industry Co., Ltd.), 22 g of 2-butanone, and 8.3 g of 2-propanol was added dropwise thereto over 2 hours. After further reaction for 2 hours, 0.09 parts of V-65 were added again and the temperature was raised to 73°C. After further reaction for 2 hours, PA-01, which is a 45% by mass of solution of (a-1) the specific copolymer (A'-1), was synthesized.

A mixture solution containing 3 g of the polymer solution PA-01 obtained from above and 16 g of ethyl acetate were prepared, mixed with a separately prepared mixture solution containing 18 g of water and 0.4 g of EMAL 20C (manufactured by Kao Corporation), and emulsified and mixed by using a homogenizer (manufactured by NIPPON SEIKI CO., LTD.). The resulting emulsion was concentrated by heating at 45°C and after removing ethyl acetate, dispersion of the polymer particles A-1 having a solid matter concentration of 20% was prepared.

**Table 1**

| (a) Polymer particles | (a-1) Specific copolymer | (a-1) Monomer composition of specific copolymer | | | | | | Weight average molecular weight |
|---|---|---|---|---|---|---|---|---|
| | | Monomer type | Content ratio (%) | Monomer type | Content ratio (%) | Monomer type | Content ratio (%) | |
| A-1 | A'-1 | EHA | 15 | MMA | 75 | MMA | 10 | 35,000 |
| A-2 | A'-2 | DMA | 20 | IBOMA | 68 | MAA | 12 | 50,000 |
| A-3 | A'-3 | BA | 21 | MA | 70 | AA | 9 | 25,000 |
| A-4 | A'-4 | EHA | 21 | St | 70 | MAA | 9 | 80,000 |

The average volume particle diameter of (a) the polymer particles A-1 to A-4 obtained was measured by a common method using MICROTRAC UPA-EX150 (trade name, manufactured by Nikkiso Co., Ltd.). The results are listed in Table 3.

Further, absence of a cross-linked structure in (a) the polymer particles A-1 to A-4 obtained was confirmed by the method described below.

The polymer particles (a) in the dispersion containing polymer particles were precipitated by centrifuge. To 1 part by mass of the precipitates thus obtained, 50 parts by mass of tetrahydrofuran or N-methyl pyrrolidone was added and heated for 5 hours at 70°C. The liquid obtained after the heating was filtered through a 1 µm membrane filter and presence or absence of any residue remained on the filter was checked by observation. Since no residue remained on the filter was obtained from any one of (a) the polymer particles A-1 to A-4, it was confirmed that there was no cross-linked structure.

### <(b) Synthesis of water soluble polymer>

### Synthetic Example 3: Synthesis of water soluble polymer (B-1)

To a 200 ml three-neck flask equipped with a stirring blade, 10.0 g of 2-butanone was added and stirred and heated for 10 min in an oil bath at 80°C under nitrogen stream. Subsequently, 12.0 g of benzyl methacrylate (manufactured by Wako Pure Chemical Industries, Ltd.), 12.0 g of hexyl methacrylate (manufactured by Tokyo Chemical Industry Co., Ltd.), 6.0 g of methacrylic acid (manufactured by Wako Pure Chemical Industries, Ltd.), 0.11 g of 3-mercaptopropionic acid, 46 mg of dimethyl 2,2'-azobis(isobutyric acid) (manufactured by Wako Pure Chemical Industries, Ltd.), 25 g of 2-butanone, and 5 g of 2-propanol (manufactured by Wako Pure Chemical Industries, Ltd.) were added dropwise thereto over 2 hours. After stirring additionally for 2 hours, 46 mg of dimethyl 2,2'-azobis(isobutyric acid) was added and stirring was performed under heating with reflux condition for 3 hours.

To the obtained polymer solution, 200 g of acetone was added and re-precipitated in 3 liter of n-hexane. The resulting precipitates were isolated by filtration and dried under vacuum to obtain 28 g of white solid. To 10.0 g of the resulting polymer, 20.0 g of 2-pyrrolidone and 20 g of a 5% aqueous solution of sodium hydrogen carbonate were added and stirred for 30 min at 80°C. The water content was adjusted by adding water in view of vaporized moisture, to give 20% solution of the water soluble polymer B-1.

### Synthesis of water soluble polymer B-2 to B-4

Each of 20% solutions of the water soluble polymer B-2 to B-4 was prepared by carrying out substantially the same operations as the synthesis of the water soluble polymer B-1 (Synthetic Example 3), except that the monomers described in following Table 2 were used and the addition amounts of 3-mercaptopropionic acid and dimethyl 2,2'-azobis(isobutyric acid) were appropriately modified.

Each of the 20% solutions of the water soluble polymer obtained in the above was visually transparent, and none of them was found to have volume average particle diameter of 10 nm or more as measured by particle size measurement based on the above-described dynamic light scattering.

**Table 2**

| (b) Water soluble polymer | (b) Monomer composition of water soluble polymer | | | | | | Weight average molecular weight |
|---|---|---|---|---|---|---|---|
| | Monomer type | Content ratio (%) | Monomer type | Content ratio (%) | Monomer type | Content ratio (%) | |
| B-1 | BnMA | 40 | HMA | 40 | MAA | 20 | 35,000 |
| B-2 | MMA | 80 | MAA | 20 | - | - | 50,000 |
| B-3 | IBOMA | 60 | HEMA | 20 | MAA | 25 | 30,000 |
| B-4 | MA | 50 | DMAAm | 30 | AA | 20 | 15,000 |

The abbreviations of the monomers described in the preparation example for the polymer particles (a), Synthetic Example for the polymer, and Table 1 and Table 2 are as follows:
EHA: 2-ethyl hexyl acrylate
MMA: methyl methacrylate
MAA: methacrylic acid
DMA: n-decyl methacrylate
IBOMA: isoboronyl methacrylate
BA: n-butyl acrylate
MA: methyl acrylate
AA: acrylic acid
HEMA: 2-hydroxyethyl methacrylate
DMAAm: N,N-dimethyl acrylamide
BnMA: benzyl methacrylate
St: styrene

### Example 1 to Example 11, Comparative Examples 1 and Comparative Examples 2

### <Preparation of Ink Pomposition>

Dispersion compositions were obtained by mixing and stirring the dispersion (dispersion C), the polymer particles (a), and the water soluble polymer (b) obtained as described above and other materials with a mixer (trade name: L4R, manufactured by Silverson Machines, Inc.) at 500 revolutions/minute such that the type and content of each of the pigment, the polymer particles (a), the water soluble polymer (b), and other raw materials in 100 g of each ink compositions are those shown in the compositions listed in Table 3 below. Thereafter, each of the dispersion compositions was placed in a plastic disposable syringe, and was filtered through a filter that was made from polyvinylidene fluoride (PVDF) and that had a pore diameter of 5 µm (trade name: MILEEX-SV, manufactured by Millipore Corporation, diameter: 25 mm), thus obtaining the ink compositions of Example 1 to Example 11 and Comparative Example 1 and Comparative Example 2.

Meanwhile, as the water soluble organic solvent (d), 2-pyrrolidone (manufactured by Sigma-Aldrich, Japan) was used. As a surfactant, ZONYL FSN (trade name, manufactured by Aldrich Company, a fluorine-based surfactant) was used. As water, ion exchange water was used.

In Table 3, the "content amount" indicates a content amount of each component such as the polymer particles, the water-soluble polymer, the pigment or the like, in 100 g of the ink composition. The content amount of dispersion medium or the like used for preparing these components and contained in the ink composition is included in the content amount of water, a water-soluble organic solvent or the like.

### Comparative Example 3 and Comparative Example 4

By using (a-1) the specific copolymerA'-1 which has been used for preparation of (a) the polymer particles A-1 and adjusting the amount of a surfactant for emulsifying dispersion, comparative polymer particles AC-1 having a particle diameter of 90 nm and comparative polymer particles AC-2 having a particle diameter of 310 nm were prepared. Except that the comparative polymer particles AC-1 and AC-2 are used instead of (a) the polymer particles A-1, the ink compositions of Comparative Example 3 and Comparative Example 4 were prepared in substantially the same manner as Example 1.

**[Table 3]**

| | (a) Polymer particles or comparative polymer particles | | | (b) Water soluble polymer | | (c) Colorant | Polymer dispersant | (d) Water soluble organic solvent | (e) Water | Surfactant | Evaluation of ink | | |
|---|---|---|---|---|---|---|---|---|---|---|---|---|---|
| | Abbreviation | Particle diameter (mm) | Content amount (g) | Abbreviation | Content amount (g) | Content amount (g) | Content amount (g) | Content amount (g) | Content amount (g) | Content amount (g) | Bleeding | Glossiness | Adhesion property |
| Example 1 | A-1 | 200 | 5 | B-1 | 5 | 2 | 1 | 20 | 66 | 1 | B | A | A |
| Example 2 | A-1 | 200 | 5 | B-2 | 10 | 2 | 1 | 20 | 61 | 1 | A | A | B |
| Example 3 | A-1 | 200 | 5 | B-3 | 10 | 2 | 1 | 29 | 52 | 1 | A | A | A |
| Example 4 | A-1 | 200 | 5 | B-4 | 5 | 2 | 1 | 29 | 57 | 1 | B | A | A |
| Example 5 | A-2 | 150 | 5 | B-1 | 8 | 2 | 1 | 20 | 63 | 1 | A | A | A |
| Example 6 | A-3 | 250 | 5 | B-1 | 8 | 2 | 1 | 20 | 63 | 1 | A | B | A |
| Example 7 | A-4 | 270 | 5 | B-1 | 8 | 2 | 1 | 20 | 63 | 1 | A | B | A |
| Example 8 | A-1 | 200 | 10 | B-1 | 5 | 2 | 1 | 20 | 61 | 1 | B | B | A |
| Example 9 | A-1 | 200 | 5 | B-1 | 20 | 2 | 1 | 20 | 51 | 1 | A | A | A |
| Example 10 | A-1 | 200 | 5 | B-1 | 5 | 2 | 1 | 40 | 46 | 1 | B | A | B |
| Example 11 | A-1 | 200 | 5 | B-1 | 5 | 2 | 1 | 5 | 81 | 1 | B | B | B |
| Comparative Example 1 | A-1 | 200 | 5 | - | - | 2 | 1 | 20 | 71 | 1 | C | C | C |
| Comparative Example 2 | - | - | - | B-4 | 5 | 2 | 1 | 20 | 71 | 1 | B | A | C |
| Comparative Example 3 | AC-1 | 90 | 5 | B-1 | 5 | 2 | 1 | 20 | 66 | 1 | A | A | C |
| Comparative Example 4 | AC-2 | 310 | 5 | B-1 | 5 | 2 | 1 | 20 | 66 | 1 | A | C | A |

### <Evaluation of Ink Composition>

The obtained ink was applied, in a thickness of 12 µm, to a vinyl chloride sheet (trade name: AVERY 400 GLOSS WHITE PERMANENT, manufactured by Avery Dennison, 8 cm x 8 cm size), using a K hand coater with a No. 2 bar thereof (manufactured by RK Print Coat Instruments Ltd.). Then, moisture was removed by drying at 60°C for 3 minutes and light exposure was performed using low pressure mercury lamp with a condition to have 1000 mJ/cm² energy.

The following evaluation was carried out using the obtained printed matter. The evaluation results are listed in Table 3 as described above.

### <Evaluation of Bleeding>

As an ink jet recording device, a commercially available ink jet printer (trade name: DMP-2831, manufactured by FUJIFILM Dimatix Inc.) was prepared. Each ink composition obtained was loaded into the ink jet printer, and was ejected onto a polyvinyl chloride substrate (trade name: AVERY 400 GLOSS WHITE PERMANENT, manufactured by Avery Dennison) heated at 40°C to record a fine line with a width of two dots and a length of 5 cm. After finishing the ejection, any bleeding of the obtained fine line was examined by visual observation.
A: Almost no bleeding and fine line in a straight state.
B: Slight bleeding and fine line in an almost straight state, but practically non-problematic.
C: Significant bleeding and fine line thickened in part, thus practically problematic.

### <Evaluation of Substrate Adhesion>

As a method for evaluation of adhesion to a polyvinyl chloride substrate, a crosshatch test (JIS K 5600-5-6, 2004) was carried out. A solid image having an average film thickness of 12 µm for an image area formed in accordance with the above-mentioned ink jet recording method which was used for bleeding evaluation. Subsequently, each printed material was subjected to the crosshatch test. The evaluation was carried out by the six levels of 0 to 5 in accordance with JIS K 5600-5-6 (2004). An evaluation of grade 0 means that the cut edge was completely smooth and there was no peeling off in any lattice cell. The results of the crosshatch test were evaluated according to the classification criteria below.

When a cut is made into the lattice for evaluation of adhesion between ink and substrate, it was made until the cut reaches the substrate, and then evaluation was carried out. Evaluation criterion A and B described below indicate being non-problematic in practical use.
A: JIS K5600-5-6 grade 0 or 1
B: JIS K5600-5-6 grade 2 or 3
C: JIS K5600-5-6 grade 4 or 5

### <Evaluation of Glossiness>

The measurement of image glossiness was performed by measuring the glossiness according to the following condition.

The measurement was carried out in accordance with JIS Z8741 for the solid image used in the above for adhesion test by means of a glossiness tester manufactured by Sheen Instruments Ltd. at a measurement angle of 60°. The evaluation score was given according to the following criteria.
A: Glossiness of 50 or more
B: Glossiness of 20 or more but less than 50
C: Glossiness of less than 20.

Evaluation level B or higher correspond to practically allowable level.

As clearly shown in Table 3, the ink composition of Example 1 to Example 9 according to the invention can form a very fine image by an inkjet method without causing bleeding by interference between applied ink droplets. Further, even when dried at low temperature such as 60°C, an image having excellent gloss and excellent adhesion to a recording medium can be formed.

Exemplary embodiments of the invention include, but are not limited to, the following.
<1> An ink-jet ink composition, comprising:
   (a) from 3% by mass to 10% by mass of polymer compound particles that include a first copolymer including at least one repeating unit derived from a hydrophilic monomer in an amount of from 1% by mass to 15% by mass, that have a volume average diameter of from 100 nm to 300 nm, and that have no cross-linked structure;
   (b) from 5% by mass to 20% by mass of at least one water soluble polymer;
   (c) from 0.1 % by mass to 10% by mass of at least one colorant;
   (d) from 5% by mass to 40% by mass of at least one water soluble organic solvent; and
   (e) water.
<2> The ink-jet ink composition according to <1>, wherein the at least one water soluble polymer comprises a second copolymer including at least one repeating unit derived from a hydrophilic monomer.
<3> The ink-jet ink composition according to <2>, wherein the second copolymer included in the at least one water soluble polymer comprises a repeating unit derived from a hydrophobic monomer and a repeating unit derived from a monomer having an anionic hydrophilic group.
<4> The ink-jet ink composition according to any one of <1> to <3>, wherein the first copolymer included in the polymer compound particles includes a repeating unit derived from (meth)acrylic acid or a salt thereof as a repeating unit derived from a hydrophilic monomer.
<5> The ink composition according to any one of <1> to <3>, wherein the first copolymer included in the polymer compound particles further includes a repeating unit derived from alkyl (meth)acrylate.
<6> The ink-jet ink composition according to any one of <1> to <3>, wherein the first copolymer included in the polymer compound particles includes a repeating unit derived from alkyl (meth)acrylate, and a repeating unit derived from (meth)acrylic acid or a salt thereof.
<7> The ink-jet ink composition according to <6>, wherein the first copolymer included in the polymer compound particles includes a repeating unit derived from alkyl (meth)acrylate having 7 to 16 carbon atoms and a repeating unit derived from (meth)acrylic acid or a salt thereof.
<8> The ink-jet ink composition according to any one of <1> to <4>, wherein the first copolymer included in the polymer compound particles further includes a repeating unit derived from a monomer selected from the group consisting of alkyl (meth)acrylate and styrene.
<9> The ink-jet ink composition according to any one of <1> to <4>, wherein the first copolymer included in the polymer compound particles further includes a repeating unit derived from a monomer selected from the group consisting of methyl (meth)acrylate, n-butyl (meth)acrylate, 2-ethyl hexyl (meth)acrylate, and styrene.
<10> The ink-jet ink composition according to any one of <2> to <9>, wherein the second copolymer included in the at least one water soluble polymer comprises the at least one repeating unit derived from a hydrophilic monomer in an amount of from 8% by mass to 50% by mass.
<11> The ink-jet ink composition according to any one of <2> to <10>, wherein a content amount of the at least one repeating unit derived from a hydrophilic monomer included in the second copolymer relative to the second copolymer is higher than a content amount of the at least one repeating unit derived from a hydrophilic monomer included in the first copolymer relative to the first copolymer.
<12> An image forming method, comprising:
   applying the ink composition according to any one of <1> to <11>, to a recording medium by an ink jet method, and
   reducing an amount of the water in the ink composition.
<13> The image forming method according to <12>, wherein the reduction of the amount of the water in the ink composition is performed in a temperature range of from 30°C to 70°C.
<14> Printed matter, comprising, on a recording medium, an image formed using the ink composition according to any one of <1> to <11> or an image recorded by the image forming method according to <12> or <13>.

All publications, patent applications, and technical standards mentioned in this specification are herein incorporated by reference to the same extent as if each individual publication, patent application, or technical standard was specifically and individually indicated to be incorporated by reference.

## Claims

1. An ink-jet ink composition, comprising:
(a) from 3% by mass to 10% by mass of polymer compound particles that include a first copolymer including at least one repeating unit derived from a hydrophilic monomer in an amount of from 1% by mass to 15% by mass relative to the first copolymer, that have a volume average diameter of from 100 nm to 300 nm, and that have no cross-linked structure;
(b) from 5% by mass to 20% by mass of at least one water soluble polymer that comprises a second copolymer including at least one repeating unit derived from a hydrophilic monomer in an amount of from 8% by mass to 50% by mass relative to the second copolymer;
(c) from 0.1% by mass to 10% by mass of at least one colorant;
(d) from 5% by mass to 40% by mass of at least one water soluble organic solvent; and
(e) water.

2. The ink-jet ink composition according to claim 1, wherein the second copolymer included in the at least one water soluble polymer comprises a repeating unit derived from a hydrophobic monomer and a repeating unit derived from a monomer having an anionic hydrophilic group.

3. The ink-jet ink composition according to either claim 1 or claim 2, wherein the first copolymer included in the polymer compound particles includes a repeating unit derived from (meth)acrylic acid or a salt thereof as a repeating unit derived from a hydrophilic monomer.

4. The ink composition according to either claim 1 or claim 2, wherein the first copolymer included in the polymer compound particles further includes a repeating unit derived from alkyl (meth)acrylate.

5. The ink-jet ink composition according to either claim 1 or claim 2, wherein the first copolymer included in the polymer compound particles includes a repeating unit derived from alkyl (meth)acrylate, and a repeating unit derived from (meth)acrylic acid or a salt thereof.

6. The ink-jet ink composition according to claim 5, wherein the first copolymer included in the polymer compound particles includes a repeating unit derived from alkyl (meth)acrylate having 7 to 16 carbon atoms and a repeating unit derived from (meth)acrylic acid or a salt thereof.

7. The ink-jet ink composition according to any one of claims 1 to 3, wherein the first copolymer included in the polymer compound particles further includes a repeating unit derived from a monomer selected from the group consisting of alkyl (meth)acrylate and styrene.

8. The ink-jet ink composition according to any one of claims 1 to 3, wherein the first copolymer included in the polymer compound particles further includes a repeating unit derived from a monomer selected from the group consisting of methyl (meth)acrylate, n-butyl (meth)acrylate, 2-ethyl hexyl (meth)acrylate, and styrene.

9. The ink-jet ink composition according to any one of claims 1 to 8, wherein a content amount of the at least one repeating unit derived from a hydrophilic monomer included in the second copolymer relative to the second copolymer is higher than a content amount of the at least one repeating unit derived from a hydrophilic monomer included in the first copolymer relative to the first copolymer.

10. An image forming method, comprising:
applying the ink composition according to any one of claim 1 to 9, to a recording medium by an ink jet method, and
reducing an amount of the water in the ink composition.

11. The image forming method according to claim 10, wherein the reduction of the amount of the water in the ink composition is performed in a temperature range of from 30°C to 70°C.

12. Printed matter, comprising, on a recording medium, an image formed using the ink composition according to any one of claims 1 to 9 or an image recorded by the image forming method according to claim 10 or claim 11.

## Patentansprüche

1. Tintenstrahl-Tintenzusammensetzung aufweisend:
(a) von 3 Masse-% bis 10 Masse-% Polymerzusammensetzungspartikel, die ein erstes Copolymer enthalten, das mindestens eine Wiederholungseinheit, die von einem hydrophilen Monomer abgeleitet ist, in einer Menge von 1 Masse-% bis 15 Masse-% bezogen auf das erste Copolymer, enthält, die einen volumenbezogenen durchschnittlichen Durchmesser von 100 nm bis 300 nm haben, und die keine vernetzte Struktur haben;
(b) von 5 Masse-% bis 20 Masse-% mindestens eines wasserlöslichen Polymers, das ein zweites Copolymer aufweist, das mindestens eine Wiederholungseinheit, die von einem hydrophilen Monomer abgeleitet ist, in einer Menge von 8 Masse-% bis 50 Masse-% bezogen auf das zweite Copolymer, enthält;
(c) von 0,1 Masse-% bis 10 Masse-% mindestens eines farbgebenden Stoffs;
(d) von 5 Masse-% bis 40 Masse-% mindestens eines wasserlöslichen organischen Lösungsmittels; und
(e) Wasser.

2. Tintenstrahl-Tintenzusammensetzung nach Anspruch 1, wobei das zweite Copolymer, das in dem mindestens einen wasserlöslichen Polymer enthalten ist, eine Wiederholungseinheit, die von einem hydrophoben Monomer abgeleitet ist, und eine Wiederholungseinheit, die von einem Monomer mit einer anionischen hydrophilen Gruppe abgeleitet ist, aufweist.

3. Tintenstrahl-Tintenzusammensetzung nach Anspruch 1 oder Anspruch 2, wobei das erste Copolymer, das in den Polymerzusammensetzungspartikeln enthalten ist, eine Wiederholungseinheit, die von (Meth)acrylsäure oder einem Salz davon abgeleitet ist, als eine Wiederholungseinheit, die von einem hydrophilen Monomer abgeleitet ist, enthält.

4. Tintenzusammensetzung nach Anspruch 1 oder Anspruch 2, wobei das erste Copolymer, das in den Polymerzusammensetzungspartikeln enthalten ist, außerdem eine Wiederholungseinheit, die von Alkyl(meth)acrylat abgeleitet ist, enthält.

5. Tintenstrahl-Tintenzusammensetzung nach Anspruch 1 oder Anspruch 2, wobei das erste Copolymer, das in den Polymerzusammensetzungspartikeln enthalten ist, eine Wiederholungseinheit, die von Alkyl(meth)acrylat abgeleitet ist, und eine Wiederholungseinheit, die von (Meth)acrylsäure oder einem Salz davon abgeleitet ist, enthält.

6. Tintenstrahl-Tintenzusammensetzung nach Anspruch 5, wobei das erste Copolymer, das in den Polymerzusammensetzungspartikeln enthalten ist, eine Wiederholungseinheit, die von Alkyl(meth)acrylat mit 7 bis 16 Kohlenstoffatomen abgeleitet ist, und eine Wiederholungseinheit, die von (Meth)acrylsäure oder einem Salz davon abgeleitet ist, enthält.

7. Tintenstrahl-Tintenzusammensetzung nach einem der Ansprüche 1 bis 3, wobei das erste Copolymer, das in den Polymerzusammensetzungspartikeln enthalten ist, außerdem eine Wiederholungseinheit, die von einem Monomer abgeleitet ist, das ausgewählt ist aus der Gruppe, die aus Alkyl(meth)acrylat und Styrol besteht, enthält.

8. Tintenstrahl-Tintenzusammensetzung nach einem der Ansprüche 1 bis 3, wobei das erste Copolymer, das in den Polymerzusammensetzungspartikeln enthalten ist, außerdem eine Wiederholungseinheit, die von einem Monomer abgeleitet ist, das ausgewählt ist aus der Gruppe, die aus Methyl(meth)acrylat, n-Butyl(meth)acrylat, 2-Ethyl-hexyl(meth)acrylat und Styrol besteht, enthält.

9. Tintenstrahl-Tintenzusammensetzung nach einem der Ansprüche 1 bis 8, wobei ein Mengenanteil der mindestens einen Wiederholungseinheit, die von einem hydrophilen Monomer, das in dem zweiten Copolymer enthalten ist, abgeleitet ist, bezogen auf das zweite Copolymer, höher ist als ein Mengenanteil der mindestens einen Wiederholungseinheit, die von einem hydrophilen Monomer, das in dem ersten Copolymer enthalten ist, abgeleitet ist, bezogen auf das erste Copolymer.

10. Bilderzeugungsverfahren aufweisend:
Aufbringen der Tintenzusammensetzung nach einem der Ansprüche 1 bis 9 auf ein Aufzeichnungsmedium mittels eines Tintenstrahlverfahrens, und
Verringern einer Menge an Wasser in der Tintenzusammensetzung.

11. Bilderzeugungsverfahren nach Anspruch 10, wobei die Verringerung der Menge des Wassers in der Tintenzusammensetzung in einem Temperaturbereich von 30°C bis 70°C durchgeführt wird.

12. Druckerzeugnis aufweisend, auf einem Aufzeichnungsmedium, eine Abbildung, die unter Verwendung der Tintenzusammensetzung nach einem der Ansprüche 1 bis 9 erzeugt wurde, oder eine Abbildung, die mittels des Bilderzeugungsverfahrens nach Anspruch 10 oder Anspruch 11 aufgezeichnet wurde.

## Revendications

1. Composition d'encre pour jet d'encre, comprenant :
(a) de 3 % en masse à 10 % en masse de particules de composé polymère qui incluent un premier copolymère incluant au moins une unité de répétition dérivée d'un monomère hydrophile en une quantité allant de 1 % en masse à 15 % en masse par rapport au premier copolymère, qui présentent un diamètre volumique moyen allant de 100 nm à 300 nm, et qui ne présentent pas de structure réticulée ;
(b) de 5 % en masse à 20 % en masse d'au moins un polymère soluble dans l'eau qui comprend un second copolymère incluant au moins une unité de répétition dérivée d'un monomère hydrophile en une quantité allant de 8% en masse à 50 % en masse par rapport au second copolymère,
(c) de 0,1 % en masse à 10 % en masse d'au moins un colorant ;
(d) de 5 % en masse à 40 % en masse d'au moins un solvant organique soluble dans l'eau, et
(e) de l'eau.

2. Composition d'encre pour jet d'encre selon la revendication 1, dans laquelle le second copolymère inclus dans le au moins un polymère soluble dans l'eau comprend une unité de répétition dérivée d'un monomère hydrophobe et une unité de répétition dérivée d'un monomère présentant un groupe hydrophile anionique.

3. Composition d'encre pour jet d'encre selon la revendication 1 ou 2, dans laquelle le premier copolymère inclus dans les particules de composé polymère inclut au moins une unité de répétition dérivée de l'acide (méth)acrylique ou un sel de celui-ci comme unité de répétition dérivée d'un monomère hydrophile.

4. Composition d'encre pour jet d'encre selon la revendication 1 ou 2, dans laquelle le premier copolymère inclus dans les particules de composé polymère inclut en outre une unité de répétition dérivée d'un (méth)acrylate d'alcoyle.

5. Composition d'encre pour jet d'encre selon la revendication 1 ou 2, dans laquelle le premier copolymère inclus dans les particules de composé polymère inclut une unité de répétition dérivée de (méth)acrylate d'alcoyle et une unité de répétition dérivée de l'acide (méth)acrylique ou d'un sel de celui-ci.

6. Composition d'encre pour jet d'encre selon la revendication 5, dans laquelle le premier copolymère inclus dans les particules de composé polymère inclut une unité de répétition dérivée de (méth)acrylate d'alcoyle présentant de 7 à 16 atomes de carbone et une unité de répétition dérivée de l'acide (méth)acrylique ou d'un sel de celui-ci.

7. Composition d'encre pour jet d'encre selon l'une quelconque des revendications 1 à 3, dans laquelle le premier copolymère inclus dans les particules de composé polymère inclut en outre une unité de répétition dérivée d'un monomère sélectionné parmi le groupe consistant en du méthacrylate d'alcoyle et du styrène.

8. Composition d'encre pour jet d'encre selon l'une quelconque des revendications 1 à 3, dans laquelle le premier copolymère inclus dans les particules de composé polymère inclut en outre une unité de répétition dérivée d'un monomère sélectionné parmi le groupe consistant en du (méth)acrylate de méthyle, du (méth)acrylate de n-butyle, du (méth)acrylate de 2-éthylhexyle, et du styrène.

9. Composition d'encre pour jet d'encre selon la revendication 1 à 8, dans laquelle une quantité en teneur d'au moins une unité de répétition dérivée d'un monomère hydrophile inclus dans le second copolymère par rapport au second copolymère est supérieure à une quantité en teneur de la au moins une unité de répétition dérivée d'un monomère hydrophile inclus dans le premier copolymère par rapport au premier copolymère.

10. Procédé de formation d'image, comprenant :
l'application de la composition d'encre selon l'une quelconque des revendications 1 à 9 sur un support d'enregistrement par un procédé à jet d'encre, et
la réduction d'une quantité d'eau dans la composition d'encre.

11. Procédé de formation d'image selon la revendication 10, dans lequel la réduction de la quantité d'eau dans la composition d'encre est réalisée dans une plage de températures allant de 30 °C à 70 °C.

12. Imprimés, comprenant, sur un support d'enregistrement, une image formée à l'aide de la composition d'encre selon l'une quelconque des revendications 1 à 9, ou une image enregistrée par le procédé de formation d'image selon la revendication 10 ou 11.
